# FASCICULE DE BREVET EUROPEEN

(11) **EP 2 276 926 B1**
(45) Date de publication et mention de la délivrance du brevet: **02.08.2017**
(21) Numéro de dépôt: 09761863.1
(22) Date de dépôt: 11.05.2009
(51) Int. Cl.: F03H 1/00, F02K 1/00

(54) **PROPULSEUR ÉLECTRIQUE POUR VÉHICULE SPATIAL.**
ELEKTRISCHE STEUERRAKETE FÜR EIN RAUMSCHIFF
ELECTRIC THRUSTER FOR A SPACECRAFT

(30) Priorité: 19.05.2008 FR 0802688
(43) Date de publication de la demande: 26.01.2011
(73) Titulaire: Airbus Safran Launchers SAS, 92130 Issy-les-Moulineaux (FR)
(72) Inventeur: LAINE, Robert, F-75015 Paris (FR)
(74) Mandataire: Gevers & Orès
(86) Numéro de dépôt international: PCT/FR2009/000543
(87) Numéro de publication internationale: WO 2009/150312

(56) Documents cités:
- FR-A- 2 788 084
- FR-A- 2 894 301
- JP-A- 2005 036 717
- US-A- 5 738 308
- US-A- 6 109 663
- KURAL A ET AL: "Design of an ion thruster movable grid thrust vectoring system" ACTA ASTRONAUTICA AUGUST/NOVEMBER 2004 ELSEVIER LTD GB, vol. 55, no. 3-9, août 2004 (2004-08), pages 421-432, XP007906870

## Description

La présente invention concerne un propulseur électrique spatial à jet ionique ou plasmique, ainsi qu'un véhicule spatial équipé d'au moins un tel propulseur.

On sait, comme cela est par exemple montré par le document FR 2 894 301, que les propulseurs électriques spatiaux du type plasmique ou ionique, qui sont utilisés depuis longtemps pour la propulsion de véhicules spatiaux, comportent une enveloppe tubulaire dont une partie tubulaire est pourvue de moyens de génération dudit jet et dont une autre partie tubulaire est pourvue de moyens d'accélération dudit jet, lesdits parties tubulaires étant disposées l'une à la suite de l'autre. De tels propulseurs électriques spatiaux présentent l'avantage d'une impulsion spécifique élevée permettant d'obtenir un même incrément de vitesse, pour une masse d'ergol plus faible qu'un propulseur chimique. En revanche, la masse sèche d'un propulseur électrique à jet ionique ou plasmique est généralement plus importante que celle d'un propulseur chimique. Or, pour une masse d'ergol déterminée, toute augmentation de la masse sèche se traduit par une réduction de l'incrément de vitesse.

L'une des causes de l'importance de la masse sèche d'un tel propulseur électrique spatial est due à la nécessité d'orienter la direction de sa poussée. En effet, un propulseur électrique spatial étant volumineux et coûteux, il n'est pas économique d'en installer plusieurs pour permettre la mise en oeuvre d'un fonctionnement pulsé, afin d'assurer simultanément la poussée et le pilotage directionnel.

Pour remédier à un tel inconvénient, on a pensé (voir par exemple le document US 5738308) à monter un tel propulseur électrique à jet sur une plateforme orientable. Cependant, une telle plateforme doit porter la totalité du propulseur et les connections avec le système d'alimentation en ergol, utilisé comme combustible pour engendrer le jet dudit propulseur. Il en résulte une augmentation significative de la masse sèche du système de propulsion, alors que la liberté d'orientation de la poussée reste limitée à plus ou moins 30 degrés, ce qui n'est pas toujours suffisant pour toutes les phases d'une mission spatiale.

Par ailleurs, comme le montre le document KURAL A et al « Design of an ion thruster movable grid thrust vectoring system » Acta Astronautica, Elsevier Ltd, GB, vol 55, n° 3-9 août 2004 (2004-08), pages 421-432, XP007906870, on a également pensé à défléchir le jet d'un propulseur spatial :
- soit par modification du champ électrique ou magnétique à la sortie de ce dernier ; toutefois, on ne peut ainsi obtenir que quelques degrés de liberté d'orientation de la direction de poussée, bien qu'étant dans l'obligation de mettre en oeuvre des tensions très élevées ;
- soit par translation dans son plan de la grille d'accélération, ce qui nécessite un système de support délicat et complexe de ladite grille, présentant des temps de réaction élevés.

L'objet de la présente invention est de remédier aux inconvénients de la technique antérieure mentionnée ci-dessus en minimisant la masse sèche du propulseur électrique et en obtenant une bonne capacité d'orientation de la poussée de celui-ci.

A cette fin, selon l'invention, le propulseur électrique spatial à jet ionique ou plasmique pour véhicule spatial, comportant une enveloppe tubulaire dont une partie tubulaire est pourvue de moyens de génération dudit jet et dont au moins une autre partie tubulaire est pourvue de moyens d'accélération dudit jet, lesdites parties tubulaires étant disposées l'une à la suite de l'autre, est remarquable en ce que les extrémités en regard desdites parties tubulaires sont reliées l'une à l'autre par une articulation permettant la rotation de la partie pourvue de moyens d'accélération par rapport à ladite partie pourvue de moyens de génération.

Ainsi grâce à la présente invention, on découple la fonction primaire de génération du plasma de la fonction d'accélération de celui-ci, qui est génératrice de la poussée dudit propulseur. Grâce à un tel découplage des fonctions de génération et d'accélération du jet, on peut fixer la partie génératrice primaire du plasma sur la structure du véhicule spatial, seule la partie accélératrice étant orientable. Ainsi, un véhicule spatial conforme à la présente invention est remarquable en ce qu'il comporte au moins un propulseur de l'invention et en ce que ladite partie tubulaire pourvue de moyens de génération était rendue solidaire dudit véhicule spatial.

On voit donc qu'une telle configuration pour le propulseur électrique spatial de la présente invention minimise la masse des parties mobiles, et donc du mécanisme d'entraînement de celles-ci, tout en permettant un grand angle de débattement de la direction de poussée. Le fait que la partie génératrice du jet, qui demande de la puissance électrique à basse tension, et donc des câbles de forte section ainsi que des tubulures d'alimentation de gaz, soit montée directement sur la structure du véhicule spatial permet de plus de gagner de la masse par rapport à toute solution où le moteur complet est monté sur une plateforme mobile.

Dans un mode de réalisation avantageux, ledit propulseur comporte une partie tubulaire centrale pourvue de moyens de génération et deux parties tubulaires latérales pourvues de moyens d'accélération, lesdites parties tubulaires latérales étant disposées de part et d'autre de ladite partie centrale et étant montées rotatives par rapport à cette dernière.

Ainsi, avec une telle configuration, on peut exercer sur ledit véhicule, comme on le verra ci-après, non seulement des forces de déplacements rectilignes, mais encore des couples de rotation.

L'axe de ladite articulation en rotation entre ladite partie tubulaire pourvue de moyens de génération et une partie tubulaire pourvue de moyens d'accélération peut être confondu avec l'axe de ladite partie tubulaire pourvue de moyens de génération ou bien incliné par rapport à ce dernier axe.

Par ailleurs, la ou les parties tubulaires pourvue(s) de moyens d'accélération peuvent être rectilignes ou, au contraire, présenter la forme d'un coude. Dans le premier cas, la face de sortie de jet de ladite partie tubulaire rectiligne est inclinée par rapport audit axe de l'articulation de rotation. Dans le deuxième cas, ledit coude peut former un angle droit.

En outre, une telle partie tubulaire pourvue de moyens d'accélération et présentant la forme d'un coude peut comporter une articulation intermédiaire supplémentaire permettant la rotation de l'une de ses branches par rapport à l'autre.
Les figures du dessin annexé feront bien comprendre comment l'invention peut être réalisée. Sur ces figures, des références identiques désignent des éléments semblables.

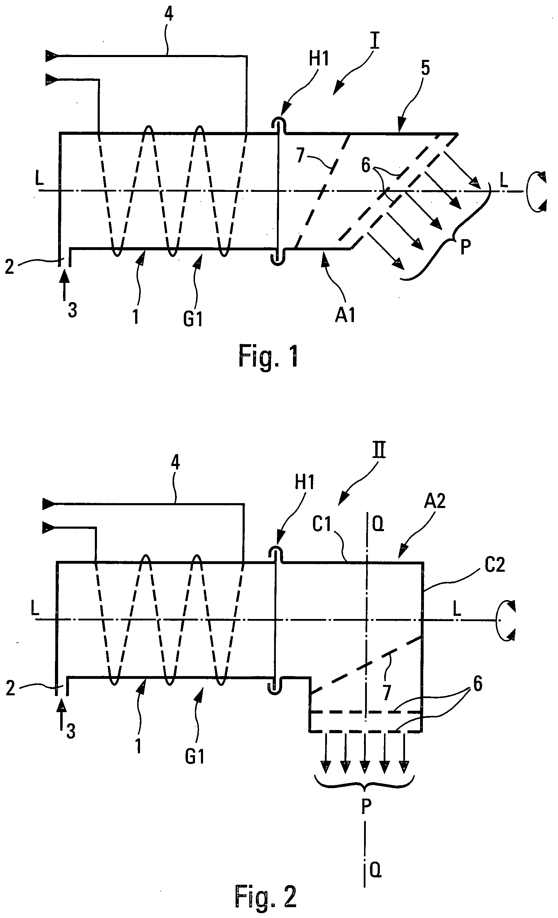

Les figures 1 à 5 illustrent schématiquement cinq exemples de réalisation d'un propulseur électrique spatial à jet conforme à la présente invention. Sur ces figures, à des fins de clarté, on n'a pas représenté les moyens d'entraînement permettant de faire tourner la ou les parties tubulaire(s) d'accélération par rapport à la partie tubulaire de génération. On comprendra toutefois aisément que de tels moyens d'entraînement peuvent comprendre, par exemple, un engrenage solidaire et coaxial de chaque partie tubulaire d'accélération et un pignon engrenant avec ledit engrenage et entraîné en rotation par un moteur, par exemple électrique.

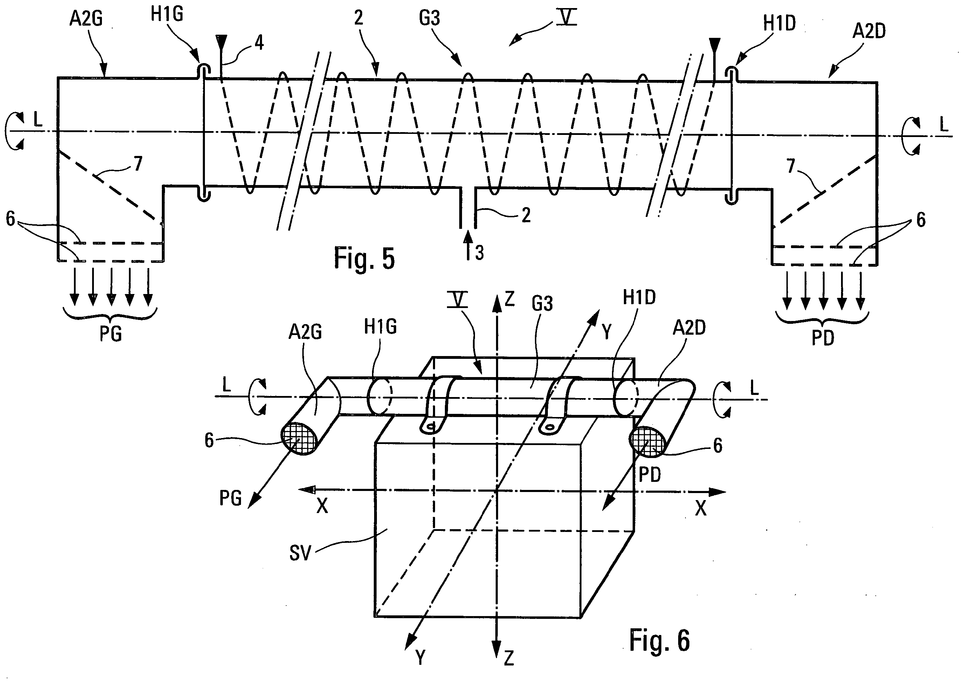

La figure 6 montre schématiquement le montage du propulseur électrique de la figure 5 sur un véhicule spatial.

Le propulseur électrique spatial à jet plasmique I, conforme à la présente invention et montré par la figure 1, comporte une partie tubulaire de génération G1, d'axe L-L, destinée à être fixée sur un véhicule spatial (non représenté), et une partie tubulaire d'accélération A 1, également d'axe L-L, rectiligne et disposée en prolongement de ladite partie tubulaire de génération G 1. Les extrémités en regard desdites parties tubulaires G1 et A1 sont reliées l'une à l'autre par une articulation de rotation H1, dont l'axe de rotation est confondu avec l'axe L-L de la partie tubulaire de génération G1. Ainsi, la partie tubulaire d'accélération rectiligne A1 peut tourner sur elle-même autour dudit axe L-L.

La partie tubulaire de génération G1 comporte une enveloppe tubulaire 1 pourvue d'une entrée 2 pour un gaz 3, ainsi qu'une antenne de chauffage 4 du plasma engendré par ledit gaz.

La partie tubulaire d'accélération A1 comporte une enveloppe tubulaire 5 dont la face de sortie de jet plasmique P, opposée à l'articulation en rotation H1, est oblique par rapport à l'axe L-L et obturée par des grilles d'accélération 6. Pour favoriser une extraction uniforme des ions du plasma, une ou plusieurs grilles d'accélération additionnelles 7 peuvent être disposées entre l'articulation H1 et les grilles d'accélération 6.

On comprendra aisément que, lorsque la partie de génération G1 est solidaire d'un véhicule spatial (non représenté) et que la partie d'accélération A1 tourne autour de l'axe L-L, le jet plasmique P décrit une cône autour dudit axe, de sorte que la direction de la poussée qu'il exerce sur ledit véhicule spatial tourne également autour de l'axe L-L. Le pilotage dudit véhicule spatial se fait donc par une simple rotation autour de l'axe L-L.

Dans la variante de propulseur électrique spatial II, représentée sur la figure 2, on retrouve la partie de génération G1 (destinée à être solidarisée d'un véhicule spatial) et l'articulation de rotation H1 décrites ci-dessus. Toutefois, la partie d'accélération rectiligne A1 y est remplacée par une partie d'accélération A2, dont l'enveloppe présente la forme d'un coude à 90°, comportant une branche C1, d'axe L-L, reliée à la partie de génération G1 par l'articulation H1 et une branche C2, d'axe Q-Q orthogonal audit axe L-L. La face de sortie du jet plasmique P, opposée à l'articulation en rotation H 1, est perpendiculaire à l'axe Q-Q (donc parallèle à l'axe L-L) et est obturée par les grilles d'accélération 6. Là, également, on peut prévoir une ou plusieurs grilles d'accélération additionnelles 7.

Avec le propulseur électrique III, le pilotage du véhicule spatial se fait par la simple rotation de la partie d'accélération A2 autour de l'axe L-L. Une telle rotation permet par exemple d'utiliser le propulseur II pour faire alternativement de la propulsion en orientant la direction du jet P pour la faire passer par le centre de gravité du véhicule spatial, puis en tournant la partie d'accélération A2, de créer un moment permettant de changer l'orientation du véhicule spatial.

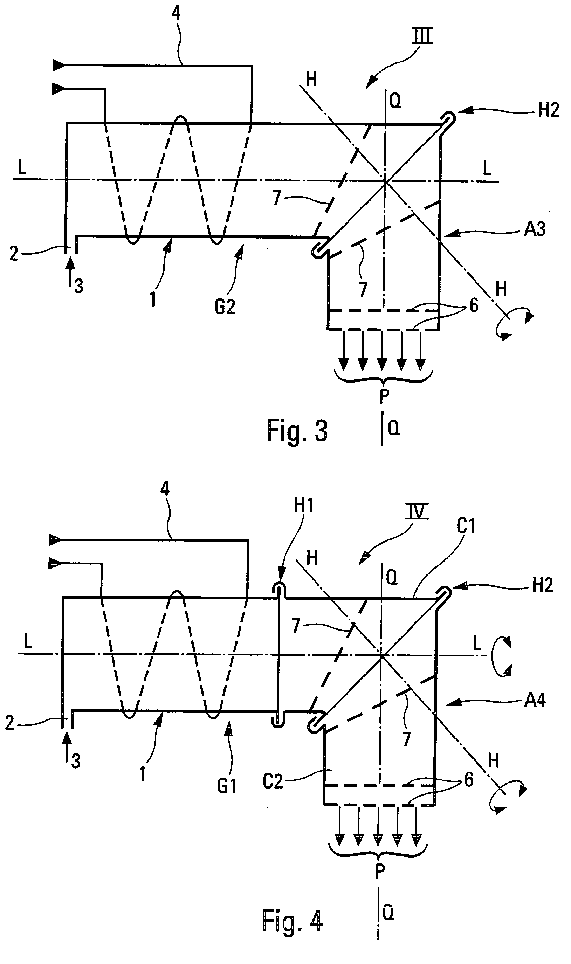

Dans le propulseur électrique III, montré par la figure 3, l'articulation H2 entre la partie de génération fixe G2 et la partie d'accélération A3 présente un axe H-H incliné, par exemple à 45°, sur l'axe L-L de la partie fixe G2. Dans ce cas, le pilotage du véhicule spatial s'obtient donc par rotation de la partie d'accélération A3, autour de l'axe incliné H-H.

Dans le propulseur électrique IV, montré par la figure 4, on retrouve la partie de génération fixe G1 des figures 1 et 2, ainsi que l'articulation H1, d'axe L-L. Cependant, dans cet exemple, la partie tubulaire d'accélération A4 est coudée (comme la partie A2 de la figure 2) et les deux branches C1 et C2 du coude sont articulées en rotation par une articulation H2, d'axe de rotation H-H, incliné par rapport à l'axe L-L, comme représenté sur la figure 3. Ainsi, par combinaison des rotations autour des deux axes L-L et H-H, on peut orienter la poussée P dans un angle solide correspondant à une demi-sphère complète.

Le propulseur électrique V illustré schématiquement par la figure 5 comporte une partie tubulaire centrale G3 pourvue des moyens de génération de jet 2, 3 et 4 décrits ci-dessus et deux parties tubulaires latérales coudées A2G et A2D pourvues des moyens d'accélération 6, 7, également décrits ci-dessus. Chacune des parties tubulaires latérales A2G et A2D est semblable à la partie coudée A2 de la figure 2. Lesdites parties tubulaires latérales A2G et A2D sont disposées de part et d'autre de la partie tubulaire centrale G3 et sont respectivement montées rotatives par rapport à cette dernière, grâce à des articulations en rotation H1G et H1D, toutes deux semblables à l'articulation H1 décrite ci-dessus.

On voit qu'ainsi le propulseur V émet deux jets de propulsion latéraux PG et PD, pouvant être orientés indépendamment l'un de l'autre autour de l'axe L-L de la partie centrale de génération G3.

Sur la figure 6, on a représenté le propulseur V monté sur un véhicule spatial SV, avec sa partie centrale G3 fixée sur ce dernier et l'axe L-L de celle-ci parallèle à un axe X-X dudit véhicule, faisant partie d'un système d'axes de référence orthogonaux X-X, Y-Y et Z-Z pour ce dernier.

La figure 6 montre aisément qu'en faisant tourner les parties latérales A2G et A2D autour de l'axe L-L, il est possible de communiquer aux jets PG et PD une multitude d'orientations, aptes à piloter ledit véhicule spatial SV selon une pluralité de translations et de rotations par rapport auxdits axes de référence.

Bien entendu, un ou plusieurs autres propulseurs V peuvent être montés de façon identique sur le véhicule spatial SV, par exemple de façon que leur axe L-L soit parallèle à un autre axe de référence Y-Y et/ou Z-Z.

On remarquera que, la pression à l'intérieur des propulseurs décrits ci-dessus étant très faible, les articulations H 1, H2, H1G, H1D peuvent être réalisées par la simple proximité de faces en regard, des roulements à billes ou des paliers lisses assurant le guidage relatif des pièces. Des moteurs électriques entraînent la rotation des parties rotatives. Des contacts tournants ou des câbles flexibles sont placés au niveau des plans de rotation, permettent d'alimenter les grilles d'accélération placées sur les parties rotatives.

Par ailleurs, dans le cas où le jet propulseur P, PG, PD sortant n'est pas globalement électriquement neutre, un ou plusieurs injecteurs d'électrons peuvent être prévus pour neutraliser le jet sortant.

On notera que, contrairement à ce qui est représenté sur les figures, le chauffage du plasma pourrait être réalisé par une antenne Helicon, disposée dans la partie fixe G1 à G3 des propulseurs. Dans ce cas, il faudrait prévoir des bobines magnétiques de guidage à la place des grilles d'accélération 6 et 7 permettant ainsi de créer les conditions de formation d'une double couche d'accélération du plasma.

## Revendications

1. Propulseur électrique spatial (I à V) à jet ionique ou plasmique pour véhicule spatial, comportant une enveloppe tubulaire dont une partie tubulaire (G1 à G3) est pourvue de moyens de génération dudit jet et dont au moins une autre partie tubulaire (A1 à A4) est pourvue de moyens d'accélération dudit jet, lesdites parties tubulaires (G1 à G3 et A1 à A4) étant disposées l'une à la suite de l'autre,
**caractérisée en ce que** les extrémités en regard desdites parties tubulaires sont reliées l'une à l'autre par une articulation (H 1, H2, H1G, H1D) permettant la rotation de la partie pourvue de moyens d'accélération par rapport à ladite partie pourvue de moyens de génération.

2. Propulseur électrique spatial selon la revendication 1,
**caractérisé en ce qu'**il comporte une partie tubulaire centrale (G3) pourvue de moyens de génération et deux parties tubulaires latérales (A2G, A2D) pourvues de moyens d'accélération, lesdites parties tubulaires latérales étant disposées de part et d'autre de ladite partie centrale et étant montées rotatives par rapport à cette dernière.

3. Propulseur électrique spatial selon l'une des revendications 1 ou 2,
**caractérisé en ce que** l'axe de ladite articulation en rotation (H 1, H1G, H1D) entre ladite partie tubulaire pourvue de moyens de génération et une partie tubulaire pourvue de moyens d'accélération, est confondu avec l'axe (L-L) de ladite partie tubulaire pourvue de moyens de génération.

4. Propulseur électrique spatial selon l'une des revendications 1 ou 2,
**caractérisé en ce que** l'axe (H-H) de ladite articulation en rotation (H2) entre ladite partie tubulaire pourvue de moyens de génération et une partie tubulaire pourvue de moyens d'accélération, est incliné par rapport à l'axe (L-L) de ladite partie tubulaire pourvue de moyens de génération.

5. Propulseur électrique spatial selon l'une des revendications 1 à 3,
**caractérisé en ce qu'**une partie tubulaire (A1) pourvue de moyens d'accélération, est rectiligne.

6. Propulseur électrique spatial selon les revendications 3 et 5,
**caractérisé en ce que** la face de sortie du jet (P) de ladite partie tubulaire rectiligne (A1) pourvue de moyens d'accélération est inclinée par rapport audit axe (L-L) de l'articulation en rotation.

7. Propulseur électrique spatial selon l'une des revendications 1 à 3,
**caractérisé en ce qu'**une partie tubulaire (A2, A2G, A2D) pourvue de moyens d'accélération présente la forme d'un coude.

8. Propulseur électrique spatial selon la revendication 7,
**caractérisé en ce que** ledit coude forme un angle droit.

9. Propulseur électrique spatial selon l'une des revendications 7 ou 8,
**caractérisé en ce que** ledit coude est pourvu d'une articulation intermédiaire (H2) permettant la rotation de l'une de ses branches (C2) par rapport à l'autre (C1).

10. Véhicule spatial,
**caractérisé en ce qu'**il comporte au moins un propulseur électrique spatial tel que spécifié sous l'une des revendications 1 à 9 et **en ce que** ladite partie tubulaire (G1 à G3) pourvue des moyens de génération dudit propulseur est rendue solidaire dudit véhicule spatial.

## Patentansprüche

1. Elektrischer Raumfahrzeugantrieb (I bis V) mit einem Ionen- oder Plasmastrahl für ein Raumfahrzeug, der ein rohrförmiges Gehäuse aufweist, von dem ein rohrförmiger Abschnitt (G1 bis G3) mit Mitteln zur Erzeugung des Strahls versehen ist, und von dem ein anderer rohrförmiger Abschnitt (A1 bis A4) mit Mitteln zur Beschleunigung des Strahls versehen ist; wobei die rohrförmigen Abschnitte (G1 bis G3 und A1 bis A4) aufeinander folgend angeordnet sind;
**dadurch gekennzeichnet, dass** die gegenüberliegenden Enden der rohrförmigen Abschnitte miteinander durch ein Gelenk (H1, H2, H1G, H1D) verbunden sind, das die Drehung des Abschnitts, der mit Mitteln zur Beschleunigung versehen ist, mit Bezug auf den Abschnitt, der mit Mitteln zur Erzeugung versehen ist, ermöglicht.

2. Elektrischer Raumfahrzeugantrieb nach Anspruch 1, **dadurch gekennzeichnet, dass** er einen zentralen rohrförmigen Abschnitt (G3), der mit Mitteln zur Erzeugung versehen ist, und zwei seitliche rohrförmige Abschnitte (A2G, A2D) aufweist, die mit Mitteln zur Beschleunigung versehen sind, wobei die seitlichen rohrförmigen Abschnitte auf beiden Seiten des zentralen Abschnitts angeordnet sind, und mit Bezug auf den letzteren drehbar angebracht sind.

3. Elektrischer Raumfahrzeugantrieb nach einem der Ansprüche 1 oder 2, **dadurch gekennzeichnet, dass** die Achse des Drehgelenks (H1, H1G, H1D) zwischen dem rohrförmigen Abschnitt, der mit Mitteln zur Erzeugung versehen ist, und einem rohrförmigen Abschnitt, der mit Mitteln zur Beschleunigung versehen ist, mit der Achse (L-L) des rohrförmigen Abschnitts zusammenfällt, der mit Mitteln zur Erzeugung versehen ist.

4. Elektrischer Raumfahrzeugantrieb nach einem der Ansprüche 1 oder 2, **dadurch gekennzeichnet, dass** die Achse (H-H) des Drehgelenks (H2) zwischen dem rohrförmigen Abschnitt, der mit Mitteln zur Erzeugung versehen ist, und einem rohrförmigen Abschnitt, der mit Mitteln zur Beschleunigung versehen ist, mit Bezug auf die Achse (L-L) des rohrförmigen Abschnitts, der mit Mitteln zur Erzeugung versehen ist, geneigt ist.

5. Elektrischer Raumfahrzeugantrieb nach einem der Ansprüche 1 bis 3, **dadurch gekennzeichnet, dass** ein rohrförmiger Abschnitt (A1), der mit Mitteln zur Beschleunigung versehen ist, geradlinig ist.

6. Elektrischer Raumfahrzeugantrieb nach den Ansprüchen 3 und 5, **dadurch gekennzeichnet, dass** die Ausgangsfläche des Strahls (P) des geraden rohrförmigen Abschnitts (A1), der mit Mitteln zur Beschleunigung versehen ist, zu der Achse (L-L) des Drehgelenks geneigt ist.

7. Elektrischer Raumfahrzeugantrieb nach einem der Ansprüche 1 bis 3, **dadurch gekennzeichnet, dass** ein rohrförmiger Abschnitt (A2, A2G, A2D), der mit Mitteln zur Beschleunigung versehen ist, die Form einer Biegung aufweist.

8. Elektrischer Raumfahrzeugantrieb nach Anspruch 7, **dadurch gekennzeichnet, dass** die Biegung einen rechten Winkel bildet.

9. Elektrischer Raumfahrzeugantrieb nach einem der Ansprüche 7 oder 8, **dadurch gekennzeichnet, dass** die Biegung mit einem Zwischengelenk (H2) versehen ist, das eine Drehung von einem seiner Schenkel (C2) mit Bezug auf den anderen (C1) ermöglicht.

10. Raumfahrzeug, **dadurch gekennzeichnet, dass** es mindestens einen elektrischen Raumfahrzeugantrieb umfasst, wie er in einem der Ansprüche 1 bis 9 angegeben ist, und dass der rohrförmige Abschnitt (G1 bis G3), der mit Mitteln zur Erzeugung des Antriebs versehen ist, an dem Raumfahrzeug befestigt ist.

## Claims

1. A plasmic or ionic jet space electric thruster (I to V) for a spacecraft, comprising a tubular shell with a tubular part (G1 to G3) provided with generation means and at least one tubular part (A1 to A4) provided with acceleration means, said tubular parts (G1 to G3 and A1 to A4) are arranged one after the other,
**characterized in that** the ends opposite said tubular parts are connected to each other by a joint (H1, H2, H1G, H1D) allowing the part provided with acceleration means to rotate with respect to said part provided with generation means.

2. A space electric thruster according to claim 1, **characterized in that** it comprises a central tubular part (G3) provided with generation means and two side tubular parts (A2G, A2D) provided with acceleration means, said side tubular parts being located on both sides of said central part and being arranged rotationally with respect to the latter.

3. A space electric thruster according to any of claim 1 or 2,
**characterized in that** the axis of said rotation joint (H1, H1G, H1D) between said tubular part provided with generation means and a tubular part provided with acceleration means, is merged with the axis (L-L) of said tubular part provided with generation means.

4. A space electric thruster according to any of claims 1 or 2,
**characterized in that** the axis (H-H) of said rotation joint (H2) between said tubular part provided with generation means and a tubular part provided with acceleration means, is tilted with respect to the axis (L-L) of said tubular part provided with generation means.

5. A space electric thruster according to any of claims 1 to 3,
**characterized in that** a tubular part (A1) provided with acceleration means is rectilinear.

6. A space electric thruster according to claims 3 and 5,
**characterized in that** the jet outlet side (P) of said rectilinear tubular part (A1) provided with acceleration means is tilted with respect to said axis (L-L) of the rotation joint.

7. A space electric thruster according to any of claims 1 to 3,
**characterized in that** a tubular part (A2, A2G, A2D) provided with acceleration means has the shape of a bend.

8. A space electric thruster according to claim 7, **characterized in that** said bend forms a right angle.

9. A space electric thruster according to any of claims 7 or 8,
**characterized in that** said bend is provided with an intermediary joint (H2) allowing one of the branches thereof (C2) to rotate with respect to the other (C1).

10. A spacecraft,
**characterized in that** it comprises at least one space electric thruster such as specified in any of claims 1 to 9 and **in that** said tubular part (G1 à G3) provided with generation means of said thruster is made integral with said spacecraft.
